# EUROPÄISCHE PATENTSCHRIFT

(11) **EP 1 832 326 B1**
(45) Veröffentlichungstag und Bekanntmachung des Hinweises auf die Patenterteilung: **24.12.2008**
(21) Anmeldenummer: 07003515.9
(22) Anmeldetag: 21.02.2007
(51) Int. Cl.: B01D 35/04, C02F 1/00

(54) **Mobiler Wasserfilter**
Portable water filter
Filtre à eau mobile

(30) Priorität: 24.02.2006 DE 102006009118
(43) Veröffentlichungstag der Anmeldung: 12.09.2007
(73) Patentinhaber: Brita GmbH, 65232 Taunusstein (DE)
(72) Erfinder: Werling, Moritz, 76297 Stutensee (DE); Brandl, Erhard, 85117 Eitensheim (DE); Hamman, Christian, 69198 Schriesheim (DE); Zimmermann, Dirk, 77972 Mahlberg (DE); Levien, Patrick, 70736 Fellbach-Schmiden (DE); Vasiljevic, Dragan, 11040 Belgrad (YU); Milosovic, Vojkan, 18000 Nis (YU)
(74) Vertreter: Mehler, Klaus

(56) Entgegenhaltungen:
- EP-A2- 0 487 327
- US-A- 5 151 179
- US-A- 5 976 362

## Beschreibung

### Technisches Gebiet

Die Erfindung betrifft einen mobilen Wasserfilter, umfassend einen Filterarm mit einer Wassereinlassöffnung sowie ein Filtergehäuse mit einem Filterelement und einer Wasserauslassöffnung, wobei der Filterarm und das Filtergehäuse über eine gemeinsame Durchtrittsöffnung flüssigkeitsleitend miteinander verbunden sind.

### Stand der Technik

Mobile Wasserfilter sind bekannt. Sie finden insbesondere als Reisefilter zur Erzeugung von Trinkwasser, beispielsweise für die Zubereitung von Getränken, Zahnputzwasser und auch Kochwasser Anwendung. Ein Reisefilter der gattungsgemäßen Art weist einen Filterarm mit einer Wassereinlassöffnung an seinem einen Ende auf. Der Filterarm mit der Wassereinlassöffnung kann mittels eines Schraubgewindes an einem Wasserauslass einer Armatur befestigt werden. An dem anderen Ende des Filterarms befindet sich ein im Wesentlichen zylinderförmiges Filtergehäuse. Filterarm und Filtergehäuse sind durch eine gemeinsame Durchtrittsöffnung miteinander verbunden. In das Filtergehäuse kann ein auswechselbares Filterelement eingesetzt werden.

Im Gebrauch wird das zu reinigende Wasser, das durch die Wassereinlassöffnung in den Filterarm eintritt, durch diesen hindurch zu dem in dem Filtergehäuse befindlichen Filterelement geleitet und in dem Filterelement gereinigt. Das gereinigte Wasser strömt dann aus der Wasserauslassöffnung am Boden des Filtergehäuses wieder aus.

Nachteilig an dem bekannten mobilen Wasserfilter ist, dass er durch den seitlich abstehenden Filterarm sperrig und unhandlich ist. Weiterhin müssen beim Transport bzw. bei Nichtgebrauch besondere Maßnahmen zum Schutz der Wassereinlass- und Auslassöffnung getroffen werden, um eine Verunreinigung der Vorrichtung durch diese Öffnungen hindurch zu verhindern.

### Darstellung der Erfindung

Aufgabe der Erfindung ist, einen mobilen Wasserfilter der eingangs genannten Art so weiterzubilden, dass er einen handlichen und kompakten Aufbau aufweist und durch einfachste Maßnahmen vor Verunreinigungen beim Transport oder Nichtgebrauch geschützt werden kann.

Diese Aufgabe wird mit einem mobilen Filter mit allen Merkmalen des Patentanspruchs 1 gelöst. Auf vorteilhafte Ausgestaltungen nehmen die Unteransprüche Bezug.

Erfindungsgemäß ist bei einem mobilen Wasserfilter, welcher einen Filterarm mit einer Wassereinlassöffnung sowie ein Filtergehäuse mit einem Filterelement und einer Wasserauslassöffnung umfasst, wobei der Filterarm und das Filtergehäuse über eine gemeinsame Durchtrittsöffnung flüssigkeitsleitend miteinander verbunden sind, vorgesehen, dass das Filtergehäuse an dem Filterarm um die gemeinsame Durchtrittsöffnung schwenkbeweglich so angelenkt ist, dass es zwischen einer Schließ- und einer Gebrauchsposition hin und her bewegbar ist.

Durch diese einfache Maßnahme ist nicht nur ein einfacher und kompakter Aufbau des mobilen Wasserfilters gewährleistet, sondern auch noch der Schutz vor Verunreinigung des Wasserfilters beim Transport bzw. Nichtgebrauch sichergestellt. Zu diesem Zweck muss das Filtergehäuse einfach nur über den Filterarm in seine Schließposition geschwenkt werden bis die Wassereinlass- und die Wasserauslassöffnung so angeordnet sind, dass sie in der Schließposition in Zusammenwirkungen mit einer jeweils gegenüberliegenden Wandung des Filterarms bzw. Filtergehäuses abgedichtet werden.

In einer bevorzugten Ausführungsform der Erfindung sind am Filtergehäuse und/oder Filterarm Anschlagmittel zur Begrenzung des Schwenkwinkels in der Schließposition vorgesehen. Hierbei ist es weiterhin vorteilhaft, wenn das Filtergehäuse in der Schließposition an dem Filterarm verriegelbar ist. Dadurch ist der mobile Wasserfilter beim Transport in seiner Schließposition gesichert.

Gemäß der Erfindung kann in das Filtergehäuse, wie aus dem Stand der Technik bekannt, ein auswechselbares Filterelement eingesetzt werden. Vorzugsweise ist jedoch das Filtergehäuse als auswechselbare Filterkartusche mit Filterelement, ausgebildet. Bei dieser Ausgestaltung der Erfindung werden die einzelnen Filtermaterialien nicht in einem separaten Filterelement, welches in ein Gehäuse einsetzbar ist, angeordnet, sondern das Filterelement wird durch das direkt in dafür vorgesehene Kammern in dem Filtergehäuse eingebrachte Filtermaterial gebildet. Ist das Filtermaterial erschöpft, wird das gesamte Filtergehäuse mit dem verbrauchten Filtermaterial entsorgt und durch eine frische Filterkartusche ersetzt. Hierdurch vereinfacht sich nicht nur die Handhabung beim Filterelementwechsel, sondern es entfallen auch noch vollständig die sonst üblichen, aufwendige Maßnahmen zum Trocknen des Filtergehäuses.

Durch Anordnen des Filtermaterials entlang einer mäanderförmigen Bahn im Filtergehäuse ist eine optimale Raumausnutzung gewährleistet. Durch diese Maßnahme lässt sich bei einem vorgegebenen Gehäuseinnenraumvolumen ein größtmöglicher Weg des zu filternden Wassers durch das Filtermaterial realisieren.

Das Filterelement enthält vorzugsweise, wie aus dem Stand der Technik bekannt, eine Filteranordnung aus unterschiedlichen Filtermaterialien. Bewährt hat sich ein Filteraufbau, bei welchem in Strömungsrichtung gesehen auf ein erstes Mikrovlies, ein Adsorptionsfilter, insbesondere aus Aktivkohlegranulat, ein lonenaustauscher und ein weiteres Mikrovlies folgen. Durch das erste Mikrovlies ist gewährleistet, dass Schwebstoffe und Partikel in dem zu filternden Wasser zurückgehalten werden. Der Adsorptionsfilter, der vorzugsweise Aktivkohlegranulat umfasst, filtert beispielsweise Geruchs- und Geschmacksstoffe aus dem zu reinigenden Wasser. Im sich daran anschließenden lonenaustauscher werden hauptsächlich Kalk, aber auch Arsen, Cadmium, Blei und Nitrate herausgefiltert. Das die Filteranordnung zum Wasserauslass hin abschließende Mikrovlies dient der Herausfilterung eines Großteils der Bakterien.

Ein erfindungsgemäßer mobiler Wasserfilter weist vorzugsweise Mittel zum Befestigen an einer Wasserzuführung, wie z. B. an einem Auslauf einer Armatur auf. Hierdurch vereinfacht sich die Handhabung beim Gebrauch. Welche Mittel der Fachmann hier einsetzen möchte, liegt im Bereich seines Durchschnittskönnens. In der Regel wird es sich hierbei um ein an die Geometrie des Auslaufs und der Wassereinlassöffnung des Filters angepasstes, hohlzylinderförmiges Verbindungselement handeln, das an den äußeren und/oder inneren Umfangsflächen mit Verbindungsmitteln, wie z. B. Gewinden oder Rastelementen mit entsprechenden Dichtelementen, versehen ist.

Vorzugsweise umfassen die Mittel zum Befestigen eine sog. Dreh-/Montageschelle. Unter Dreh-/Montageschelle soll im Sinne der Erfindung ein im Wesentlichen ringförmiges Element verstanden werden, das an seinem einen Ende am Außenumfang Rastelemente aufweist, die in entsprechende Nuten im Innenumfang der Wassereinlassöffnung einrastbar sind. Nach einmaligem Einrasten bei der Erstmontage, die werkzeuglos und beispielsweise noch im Werk erfolgen kann, lässt sich die so ausgestaltete Dreh-/Montageschelle am Filterarm frei drehen. Dies hat den Vorteil, dass der Filterarm nach der Montage des anderen Endes der Schelle am Wasserauslauf an diesem in einfacher Weise variabel positioniert werden kann. Die Abdichtung zum Filterarm hin kann über entsprechende Dichtelemente, beispielsweise über einen einfachen O-Ring, erfolgen.

Zur Montage am Wasserauslauf kann die Dreh-/Montageschelle ohne Beschränkung der Allgemeinheit beispielsweise ein Gewinde zum Anschrauben an ein entsprechendes Gewinde für einen Strahlregler an dem Wasserauslauf aufweisen. Je nach Ausbildung des Gewindes des Wasserauslaufs als Innen- oder Außengewinde, kann die Dreh-/Montageschelle ein dazu passendes Außen- bzw. Innengewinde besitzen.

Hier kann auch ein sog. Wendeadapter zum Einsatz kommen. Hierbei handelt es sich um ein im Wesentlichen ringförmiges Element, das an seinen einander gegenüberliegenden Enden mit an übliche Wasserauslaufgeometrien angepasste Innen- und Außengewinden ausgestattet ist. Der Wendeadapter, der zum Fixieren an der Dreh-/Montageschelle in einem mittleren Bereich ein weiteres Gewinde aufweisen kann, wird zur Befestigung an einem Wasserauslauf entsprechend ausgerichtet und mit dem jeweils passenden Ende an das Auslaufgewinde aufgeschraubt. Ein besonderer Vorteil der oben beschriebenen Anordnung ist, dass der Wendeadapter in der Dreh-/Montageschelle integriert ist. Ein Mitführen von Zusatzadaptern ist nicht erforderlich.

In einer weiteren bevorzugten Ausführungsform der Erfindung weist der mobile Wasserfilter ein in den Filterarm oder in das Filtergehäuse integriertes Montagewerkzeug, beispielsweise einen sog. Mischdüsenschlüssel auf. Mittels des Mischdüsenschlüssels kann der Strahlregler vom Wasserauslauf entfernt und damit das Gewinde zum Befestigen des mobilen Wasserfilters freigelegt werden. Bei dem integrierten Monatagewerkzeug kann es sich um eine Vertiefung in der Wandung des Filterarms oder des Filtergehäuses handeln, die die geometrische Gestalt eines Mischdüsenschlüssels aufweist. Beim Bedienen dieses Werkzeugs kann bei Positionierung der gesamte Korpus des Wasserfilters als Hebel eingesetzt werden. Die Anschlagmittel zum Begrenzen der Schwenkbewegung in der Schließposition verhindern dabei ein Wegdrehen des Filterarms oder des Filtergehäuses. Im Fall der auswechselbaren Filterkartusche ist das Montagewerkzeug vorteilhafterweise in den Boden des Filterarms integriert.

Die vorliegende Erfindung ermöglicht es, den Filterarm und das Filtergehäuse insgesamt im Wesentlichen quaderförmig, vorzugsweise mit abgerundeten Ecken auszubilden. Dieser einfache kompakte Aufbau erleichtert die Handhabung. Der erfindungsgemäße Wasserfilter kann beispielsweise in einfacher Weise in einer Hosentasche transportiert werden.

Es gibt nun verschiedene Möglichkeiten, die Lehre der vorliegenden Erfindung auf vorteilhafte Weise auszugestalten und weiterzubilden. Dazu ist einerseits auf die dem Patentanspruch 1 nachgeordneten Ansprüche, andererseits auf die nachfolgende Erläuterung bevorzugter Ausführungsbeispiele der Erfindung an Hand der Zeichnung zu verweisen. In Verbindung mit der Erläuterung der bevorzugten Ausführungsbeispiele der Erfindung an Hand der Zeichnung werden auch im Allgemeinen bevorzugte Ausgestaltungen und Weiterbildungen der Lehre erläutert.

Es zeigen jeweils in perspektivischer Darstellung:
- Fig. 1: einen erfindungsgemäßen mobilen Wasserfilter in Schließposition in einer a) Vorder- und b) Rückansicht,
- Fig. 2: in einer Gebrauchsposition,
- Fig. 3: den Bereich um die Wassereinlassöffnung in einer Detaildarstellung,
- Fig. 4: die Wassereinlassöffnung mit Befestigungsmitteln und Adapter in einer Teilschnittdarstellung,
- Fig. 5: in einer perspektivischen Längsschnittdarstellung die Wasserführung in einer erfindungsgemäßen Filterkartusche ohne Filtermaterial,
- Fig. 6: in einer schematischen Darstellung der prinzipielle Aufbau eines Filterelements,
- Fig. 7: einen möglichen Anschluss der Filterkartusche an den Filterarm,

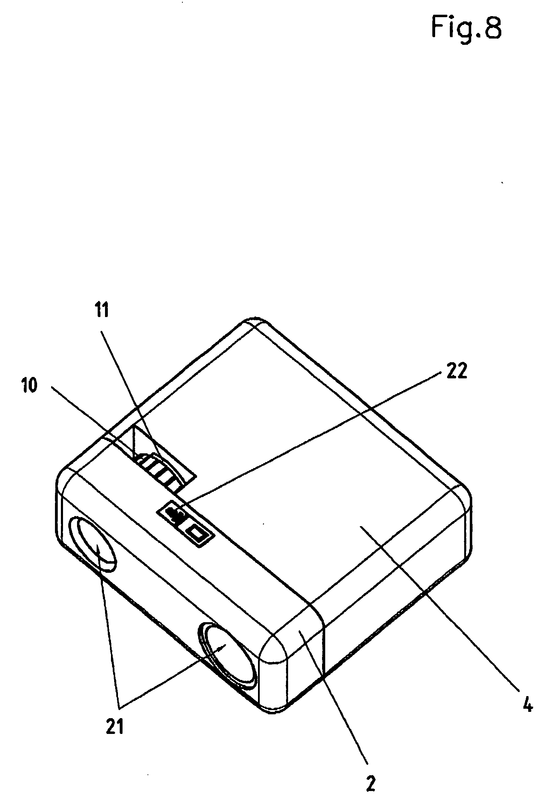

- Fig. 8: ein in den Boden integriertes Montagewerkzeug;

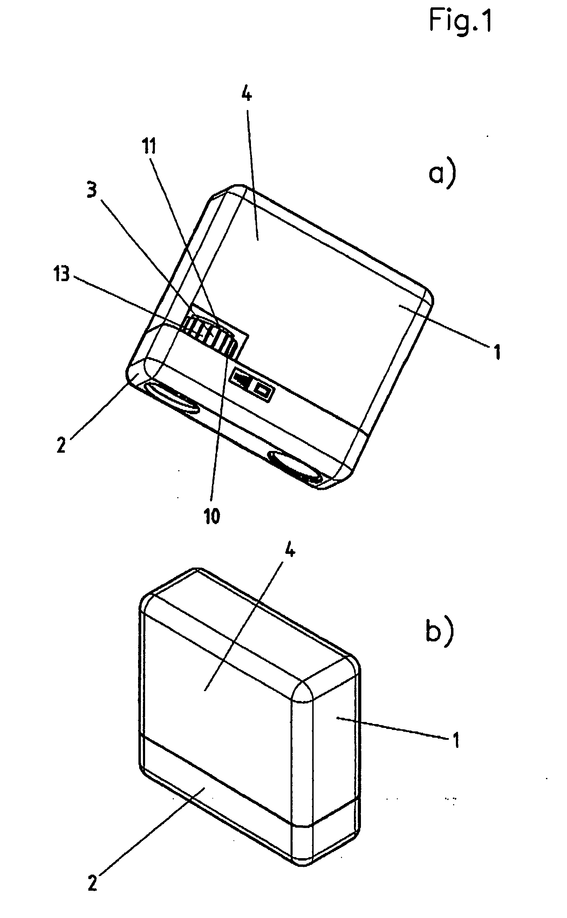

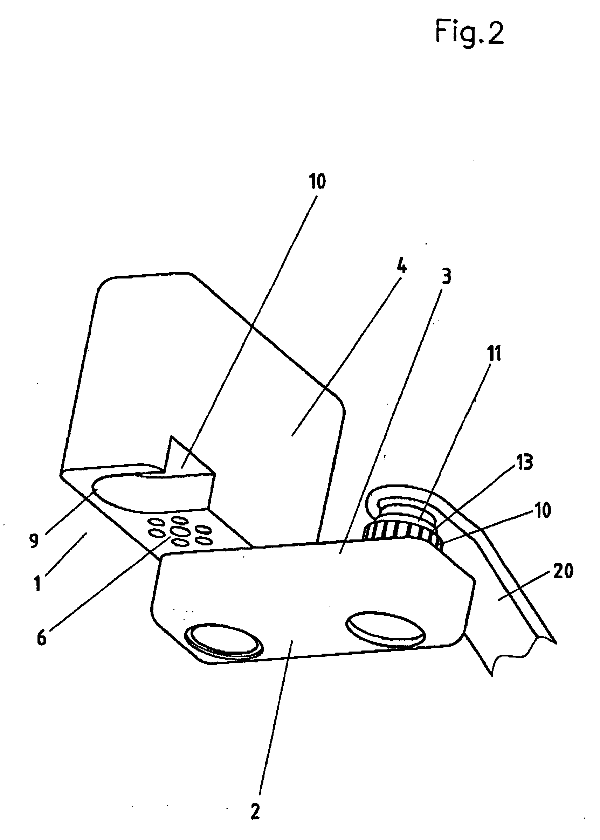

Man erkennt in Fig. 1 eine bevorzugte Ausführungsform eines erfindungsgemäßen mobilen Wasserfilters 1 in seiner Schließposition in einer a) Vorder- und b) Rückansicht. Der Korpus des mobilen Wasserfilters1 ist quaderförmig mit gerundeten Ecken ausgebildet und kann aufgrund dieses einfachen, kompakten Aufbaus leicht transportiert werden. Der mobile Wasserfilter 1 weist einen Filterarm 2 mit einer Wassereinlassöffnung 3 sowie ein Filtergehäuse 4 mit einem Filterelement 18 und einer Wasserauslassöffnung 6 auf, wobei der Filterarm 2 und das Filtergehäuse 4 über eine gemeinsame Durchtrittsöffnung 7 flüssigkeitsleitend miteinander verbunden sind. Erfindungsgemäß ist das Filtergehäuse 4 an dem Filterarm 2 um die gemeinsame Durchtrittsöffnung 7 schwenkbeweglich so angelenkt ist, dass es zwischen einer Schließ- (Fign. 1a) und b)) und einer Gebrauchsposition (Fig. 2) hin und her bewegbar ist.

Man erkennt in Fig. 2, in welcher der erfindungsgemäße mobile Wasserfilter 1 in seiner Gebrauchssituation dargestellt und an den Wasserauslass 20 einer Armatur angeschlossen ist, dass gemäß einer weiteren bevorzugten Ausführungsform der Erfindung die Wassereinlass- 3 und die Wasserauslassöffnung 6 so angeordnet sind, dass sie in der Schließposition in Zusammenwirkungen mit jeweils gegenüberliegende Wandungen des Filterarms 2 bzw. Filtergehäuses 4 abgedeckt und dadurch abgedichtet werden. Hierzu können, wie weiter unten noch beschrieben wird, Dichtelemente vorgesehen sein.

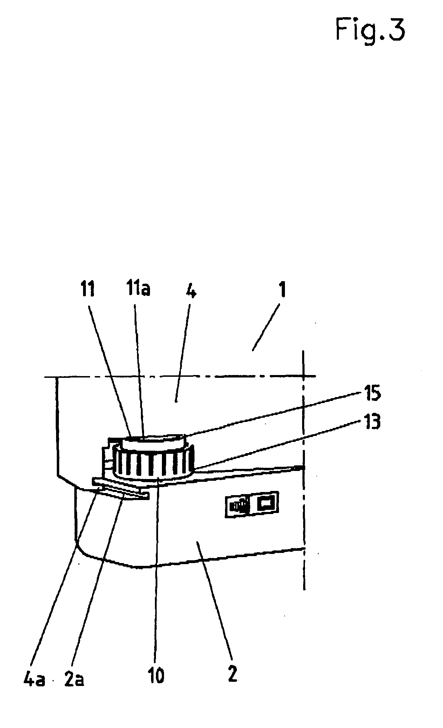

Man erkennt in Fig. 2 weiterhin, dass am Filtergehäuse Anschlagmittel zur Begrenzung des Schwenkwinkels in der Schließposition vorgesehen sind. Diese Anschlagmittel werden bei der dargestellten Ausführungsform in einfacher Weise durch eine Aussparung 8 in dem Boden des Filtergehäuses 4 gebildet, in welche der Wassereinlass 3, der in der dargestellten Ausführungsform mit einer sog. Dreh-/Montageschelle 10 und einem Wendeadapter 11 zum Anschließen an den Wasserauslauf 20 versehen ist, die aus der Ebene des Filterarms 2 nach oben herausragen, beim Einschwenken des Filtergehäuses 4 in die Schließposition so weit einführbar ist, bis Dreh-/Montageschelle 10 und der Wendeadapter 11 außenumfangsseitig an der rückseitigen Wandung 9 der Aussparung 8 zum Anliegen kommen und die Schwenkbewegung begrenzen. Durch eine Nut- und Hinterschnittanordnung 2a, 4a im Filtergehäuse 2 und Filterarm 4, so wie in Fig. 3 dargestellt, lässt sich das Filtergehäuse in einfacher Weise in der Schließposition verriegeln.

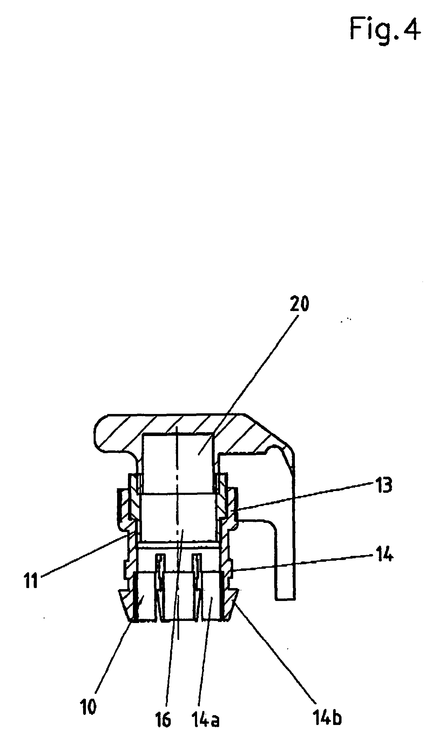

Man erkennt in den Figuren 3 und 4, dass die Dreh-/Montageschelle 10 als ringförmiges Element 13 ausgebildet sein kann, welches an seinem unteren, in die Wassereinlassöffnung 3 des Filterarms 2 einsetzbaren Ende Rastelemente 14 in Form von nach unten weisenden Stegen 14a mit Rastklauen 14b aufweist, die in entsprechende (hier nicht dargestellte) Nuten im Innenumfang der Wassereinlassöffnung 3 einrastbar sind. Nach einmaligem Einrasten bei der Erstmontage, die werkzeuglos und beispielsweise noch im Werk erfolgen kann, lässt sich die so ausgestaltete Dreh-/Montageschelle 10 am Filterarm 2 frei drehen. Dies hat den Vorteil, dass der Filterarm 2 nach der Montage am Wasserauslauf 20 in einfacher Weise variabel positioniert werden kann. Die Abdichtung zum Filterarm 2 hin kann über entsprechende Dichtelemente, beispielsweise über einen einfachen O-Ring, erfolgen.

Bei der in den Figuren 3 und 4 dargestellten Ausführungsform erfolgt die Verbindung der Dreh-/Montageschelle 10 zu dem Wasserauslauf 20 über den auf dem filtergehäuseseitigen Ende der Dreh-/Montageschelle 10 montierten Wendeadapter 11 (s. hierzu insbesondere die Fign. 3 und 4). Der Wendeadapter 11 hat eine im Wesentlichen ringförmige Gestalt und weist in der dargestellten Ausführungsform ohne Beschränkung der Allgemeinheit ein an übliche Wasserauslassgeometrien angepasstes Innen- (in Fig. 4 durch den aufgeschraubten Wasserauslauf verdeckt) und ein Außengewinde 15, 16 auf, und kann damit durch Drehung um 180° an alle handelsüblichen Armaturen mit einem Gewinde am Wasserauslauf montiert werden.

Man erkennt weiterhin in Fig. 3 ,dass auf dem oberen Umfangsrand des Wendeadapters 11 ein Dichtelement in Form eines O-Rings 11a zum Abdichten gegenüber dem Wasserauslass 20 der Armatur im Gebrauch bzw. gegenüber der unteren Wandung des Filtergehäuses 4 in der Schließposition angeordnet ist. Es liegt auf der Hand, dass noch weitere Dichtelemente vorgesehen sein können, beispielsweise auch zwischen dem Dreh-/Montageschelle 10 und dem Wendeadapter 11.

Dadurch, dass der Wendeadapter 11 bei der dargestellten Ausführungsform in der Dreh-/Montageschelle10 integriert ist, ist ein Mitführen von Zusatzadaptern nicht erforderlich.

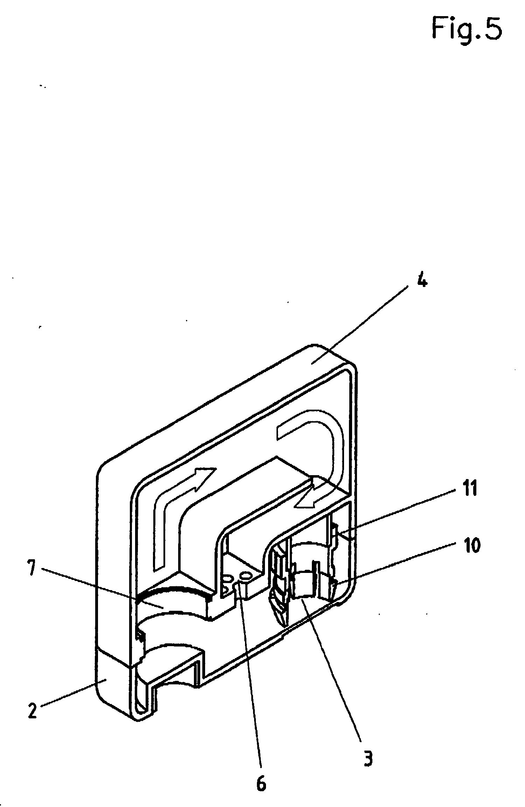

Bei der in den Figuren dargestellten Ausführungsform ist das Filtergehäuse 4 gemäß einer besonders bevorzugten Ausführungsform der Erfindung als auswechselbare Filterkartusche mit Filterelement 18 ausgebildet. Das Filterelement 18 kann vorteilhafterweise, wie man in Fig. 5 erkennt, durch entlang einer mäanderförmigen Bahn im Filtergehäuse 4 angeordnetes Filtermaterial gebildet werden. Durch die mäanderförmige Führung ist eine optimale Raumausnutzung gewährleistet. Durch diese Maßnahme lässt sich bei einem vorgegebenen Gehäuseinnenraumvolumen ein größtmöglicher Weg des zu filternden Wassers durch das Filtermaterial realisieren.

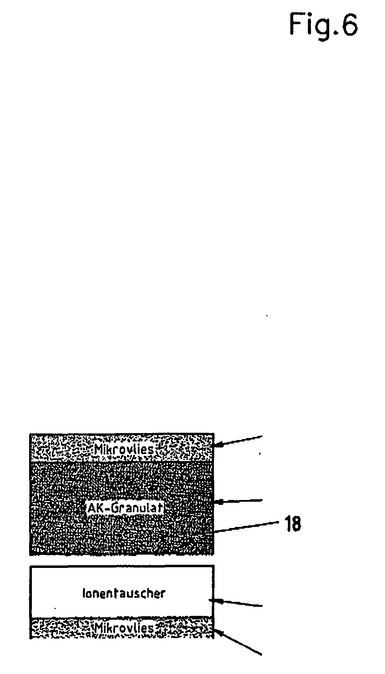

Eine bevorzugt eingesetzte, aus dem Stand der Technik bekannte Filteranordnung für das Filterelement 18 ist in Fig. 6 dargestellt. Das Filterelement 18 weist in Strömungsrichtung gesehen ein erstes Mikrovlies, ein Adsorptionsfilter, insbesondere aus Aktivkohlegranulat, ein lonenaustauscher und ein weiteres Mikrovlies auf. Durch das erste Mikrovlies ist gewährleistet, dass Schwebstoffe und Partikel in dem zu filternden Wasser zurückgehalten werden. Der Adsorptionsfilter, der vorzugsweise Aktivkohlegranulat umfasst, filtert beispielsweise Geruchs- und Geschmacksstoffe aus dem zu reinigenden Wasser. Im sich daran anschließenden Ionenaustauscher werden hauptsächlich Kalk, aber auch Arsen, Cadmium, Blei und Nitrate herausgefiltert. Das die Filteranordnung zum Wasserauslass hin abschließende Mikrovlies dient der Herausfilterung eines Großteils der Bakterien.

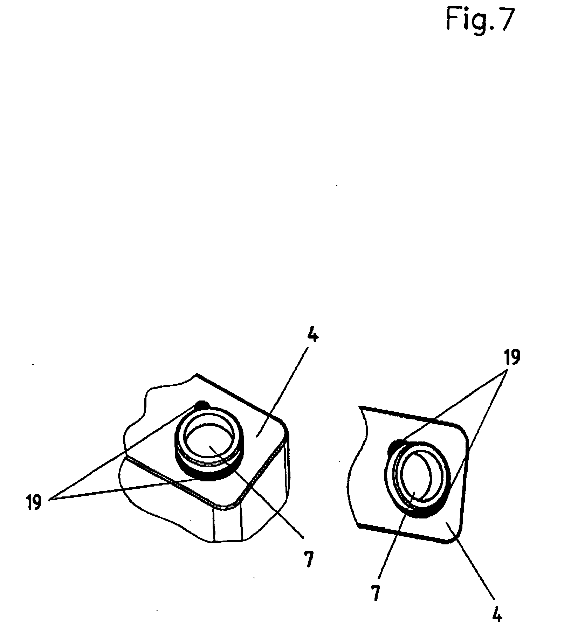

Bei Ausbildung des Filtergehäuses 4 als auswechselbare Filterkartusche wird die Filterkartusche vorteilhafterweise so am Filterarm 2 befestigt, dass sie im Gebrauch sicher fixiert, aber zum Auswechseln möglichst einfach und ohne Werkzeug lösbar ist. Hierzu eignet sich insbesondere die in Fig. 7 beispielhaft dargestellte Verbindung nach Art eines Bajonettverschlusses. Montage und Demontage der Filterkartusche sind nur in einer exakt definierten Position möglich. In dieser Position liegen die in Fig. 7 dargestellten, der Durchtrittsöffnung 7 in der Filterkartusche zugeordneten, ringförmigen Nasen 19 in dafür vorgesehenen, hier nicht dargestellten, kongruenten Ausnehmungen im Bereich der Durchtrittsöffnung 7 im Filterarm 2. Hierdurch ist eine kraftlose Montage und Demontage der Filterkartusche möglich. Durch die formschlüssige Verbindung der Bauteile lässt sich insbesondere auch der Verschleiß reduzieren.

Gemäß einer weiteren bevorzugten Ausführungsform der Erfindung weist der mobile Wasserfilter 1 ein in den Filterarm 2 integriertes Montagewerkzeug 21, beispielsweise einen sog. Mischdüsenschlüssel, auf. Mittels des Mischdüsenschlüssels kann ein eventuell vorhandener Strahlregler vom Wasserauslauf 20 entfernt und damit das Gewinde zum Befestigen des Wasserfilters freigelegt werden. Das integrierte Montagewerkzeug 21 kann, wie in der Figur dargestellt als Vertiefung in der Wandung des Filterarms 2, die die geometrische Gestalt eines Mischdüsenschlüssels besitzt, ausgebildet sein. Beim Bedienen dieses Werkzeugs kann der gesamte Korpus des Wasserfilters 1 als Hebel eingesetzt werden.

Schließlich kann es noch vorteilhaft sein, eine Anzeige für die Standzeit des Filters vorzusehen, beispielsweise in Form einer an sich bei Wasserfilteranwendungen bekannten Flüssigkristallanzeige 22 an der Gehäusewandung.

## Patentansprüche

1. Mobiler Wasserfilter (1) umfassend einen Filterarm (2) mit einer Wassereinlassöffnung (3) sowie ein Filtergehäuse (4) mit einem Filterelement (18) und einer Wasserauslassöffnung (6), wobei der Filterarm (2) und das Filtergehäuse (4) über eine gemeinsame Durchtrittsöffnung (7) flüssigkeitsleitend miteinander verbunden sind, bei dem das Filtergehäuse (4) an dem Filterarm (2) um die gemeinsame Durchtrittsöffnung (7) schwenkbeweglich so angelenkt ist, dass es zwischen einer Schließ- und einer Gebrauchsposition hin und her bewegbar ist, und bei dem die Wassereinlass- (3) und die Wasserauslassöffnung (6) so angeordnet sind, dass sie in der Schließposition in Zusammenwirkungen mit jeweils gegenüberliegenden Wandungen des Filterarms (2) bzw. Filtergehäuses (4) abgedichtet werden.

2. Mobiler Wasserfilter nach Anspruch 1, bei dem am Filtergehäuse (4) und/oder Filterarm (2) Anschlagmittel zur Begrenzung des Schwenkwinkels in der Schließposition vorgesehen sind.

3. Mobiler Wasserfilter nach Anspruch 1 oder 2, bei dem das Filtergehäuse (4) in der Schließposition am Filterarm (2) verriegelbar ist.

4. Mobiler Wasserfilter nach einem der Ansprüche 1 bis 3, bei dem das Filtergehäuse (4) als auswechselbare Filterkartusche mit Filterelement (18) ausgebildet ist.

5. Mobiler Wasserfilter nach einem der Ansprüche 1 bis 4, bei dem das Filterelement (18) Filtermaterial umfasst, welches in dem Filtergehäuse (4) entlang einer mäanderförmigen Bahn angeordnet ist.

6. Mobiler Wasserfilter nach einem der Ansprüche 1 bis 5 bei dem das Filterelement (18) in Strömungsrichtung ein erstes Mikrovlies, einen Adsorptionsfilter, insbesondere aus Aktivkohle, einen lonenaustauscher und ein weiteres Mikrovlies umfasst.

7. Mobiler Wasserfilter nach einem der Ansprüche 1 bis 6, bei dem die Wassereinlassöffnung (3) Mittel zum Befestigen an einer Wasserzuführung, wie z. B. einem Wasserauslass (20) einer Armatur, umfasst.

8. Mobiler Wasserfilter nach Anspruch 7, bei dem die Mittel zum Befestigen eine Dreh-/Montageschelle (10) und/oder einen Wendeadapter (11) umfassen.

9. Mobiler Wasserfilter nach einem der Ansprüche 1 bis 8, bei dem in den Filterarm (2) und/oder in das Filtergehäuse (4) ein Montagewerkzeug (21) integriert ist.

10. Mobiler Wasserfilter nach einem der Ansprüche 1 bis 9, bei dem der Filterarm (2) und das Filtergehäuse (4) in der Schließposition eine im Wesentlichen quaderförmige Gestalt aufweisen.

11. Mobiler Wasserfilter nach einem der Ansprüche 1 bis 10, bei dem eine Flüssigkristallanzeige (22) zum Anzeigen der Standzeit des Filterelements (18) vorgesehen ist.

## Claims

1. Mobile water filter (1), comprising a filter arm (2) with a water inlet opening (3) as well as a filter housing (4) with a filter element (18) and a water outlet opening (6), wherein the filter arm (2) and the filter housing (4) are connected together by way of a common passage opening (7) for conveying fluid, in which the filter housing (4) is articulated to the filter arm (2) so as to be pivotably mobile about the common passage opening (7) so that it can move back and forth between a closed position and a position of use, and in which the water inlet opening (3) and the water outlet opening (6) are disposed so that they are sealed in the closed position by interacting with respective opposite walls of the filter arm (2) and the filter housing (4).

2. Mobile water filter according to Claim 1, in which stop means are provided on the filter housing (4) and/or filter arm (2) to limit the pivot angle in the closed position.

3. Mobile water filter according to Claim 1 or 2, in which the filter housing (4) is locked to the filter arm (2) in the closed position.

4. Mobile water filter according to any one of Claims 1 to 3, in which the filter housing (4) is formed as a replaceable filter cartridge with a filter element (18).

5. Mobile water filter according to any one of Claims 1 to 4, in which the filter element (18) comprises filter material which is disposed in the filter housing (4) along a meandering path.

6. Mobile water filter according to any one of Claims 1 to 5, in which the filter element (18) comprises, in the direction of flow, a first microfleece, an adsorption filter, in particular of activated carbon, an ion exchanger and a further microfleece.

7. Mobile water filter according to any one of Claims 1 to 6, in which the water inlet opening (3) comprises means for fastening to a water supply such as, e.g. a water outlet (20) of a fitting.

8. Mobile water filter according to Claim 7, in which the means for fastening comprise a rotary assembly clip (10) and/or a turning adapter (11).

9. Mobile water filter according to any one of Claims 1 to 8, in which an assembly tool (21) is integrated into the filter arm (2) and/or into the filter housing (4).

10. Mobile water filter according to any one of Claims 1 to 9, in which the filter arm (2) and the filter housing (4) are of a substantially cuboid form in the closed position.

11. Mobile water filter according to any one of Claims 1 to 10, in which a liquid-crystal display (22) is provided to display the working life of the filter element (18).

## Revendications

1. Filtre à eau mobile (1), comprenant un bras filtrant (2) avec un orifice d'entrée d'eau (3) ainsi qu'un boîtier de filtre (4) avec un élément filtrant (18) et un orifice de sortie d'eau (6), le bras filtrant (2) et le boîtier de filtre (4) étant reliés l'un à l'autre de manière fluidique par le biais d'un orifice de passage commun (7), dans lequel le boîtier de filtre (4) est articulé au bras filtrant (2) de manière pivotante autour de l'orifice de passage commun (7) de sorte que le boîtier puisse être déplacé dans un sens et dans l'autre entre une position de fermeture et une position d'utilisation, et dans lequel les orifices d'entrée d'eau (3) et de sortie d'eau (6) sont agencés de sorte à être étanchéifié dans la position de fermeture en coopérations avec des parois du bras filtrant (2) et/ou du boîtier de filtre (4) se faisant respectivement face.

2. Filtre à eau mobile selon la revendication 1, dans lequel des moyens de butée sont prévus au boîtier de filtre (4) et/ou du bras filtrant (2) pour limiter l'angle de pivotement dans la position de fermeture.

3. Filtre à eau mobile selon la revendication 1 ou 2, dans lequel le boîtier de filtre (4) peut être verrouillé dans la position de fermeture au bras filtrant (2).

4. Filtre à eau mobile selon l'une quelconque des revendications 1 à 3, dans lequel le boîtier de filtre (4) est réalisé sous forme de cartouche filtrante remplaçable avec élément filtrant (18).

5. Filtre à eau mobile selon l'une quelconque des revendications 1 à 4, dans lequel l'élément filtrant (18) comprend un matériau filtrant, qui est agencé dans le boîtier de filtre (4) le long d'une bande en forme de méandre.

6. Filtre à eau mobile selon l'une quelconque des revendications 1 à 5, dans lequel l'élément filtrant (18) comprend dans le sens d'écoulement une première microfibre non tissée, un filtre d'adsorption, en particulier en charbon actif, un échangeur d'ions et une autre microfibre non tissée.

7. Filtre à eau mobile selon l'une quelconque des revendications 1 à 6, dans lequel l'orifice d'entrée d'eau (3) comprend des moyens de fixation à une amenée d'eau, comme par exemple à une sortie d'eau (20) d'une robinetterie.

8. Filtre à eau mobile selon la revendication 7, dans lequel les moyens de fixation comprennent une bride rotative / de montage (10) et/ou un adaptateur réversible (11).

9. Filtre à eau mobile selon l'une quelconque des revendications 1 à 8, dans lequel un outil de montage (21) est intégré dans le bras filtrant (2) et/ou dans le boîtier de filtre (4).

10. Filtre à eau mobile selon l'une quelconque des revendications 1 à 9, dans lequel le bras filtrant (2) et le boîtier de filtre (4) présentent dans la position de fermeture une forme essentiellement parallélépipédique.

11. Filtre à eau mobile selon l'une quelconque des revendications 1 à 10, dans lequel un affichage à cristaux liquides (22) est prévu pour afficher la durée de vie de l'élément filtrant (18).
